# EUROPÄISCHE PATENTSCHRIFT

(11) **EP 1 541 891 B1**
(45) Veröffentlichungstag und Bekanntmachung des Hinweises auf die Patenterteilung: **06.01.2010**
(21) Anmeldenummer: 04026891.4
(22) Anmeldetag: 12.11.2004
(51) Int. Cl.: F16D 69/02

(54) **Einstückiger Reibkörper mit einem Träger und darauf angeordnetem Reibbelag und Verfahren zu seiner Herstellung**
One-piece friction element comprising a substrate having a friction lining thereon, and a process for the production thereof.
Corps de frictionmonobloc comprenant un support muni d'un garniture de friction, et son procédé de fabrication.

(30) Priorität: 12.12.2003 DE 10358320
(43) Veröffentlichungstag der Anmeldung: 15.06.2005
(73) Patentinhaber: Rex Industrie-Produkte Graf von Rex GmbH, 74541 Vellberg (DE)
(72) Erfinder: Vollweiter, Heinrich, 74541 Vellberg (DE)
(74) Vertreter: TER MEER - STEINMEISTER & PARTNER GbR

(56) Entgegenhaltungen:
- DE-A1- 1 780 124
- US-A- 6 022 502

## Beschreibung

Gegenstand der Erfindung ist ein einstückiger Reibkörper mit einem Träger und mindestens einem darauf angeordneten Reibbelag, auf der Grundlage von Verstärkungsfasern, hitzegehärtete Bindemittel und übliche Zusatzstoffe enthaltenden Reibmaterialien, sowie ein Verfahren zu seiner Herstellung.

Reibkörper, die in einer unter Hitze und Druckeinwirkung gehärteten Bindemittelmatrix Verstärkungsfasern, Gleitmittel, Schleifmittel, anorganische Materialien und Füllstoffe enthalten, werden in großem Umfang in den verschiedensten Bereichen der Technik eingesetzt, namentlich als Brems-, Kupplungs- oder Reibbeläge. Diese Reibkörper umfassen im allgemeinen einen Träger oder eine Trägerplatte aus Metall oder Kunststoff und mindestens einen darauf angeordneten Reibbelag. Die Verbindung zwischen dem Reibbelag und dem Träger erfolgt üblicherweise durch Vernieten oder Verkleben. Der metallische Träger kann in Form einer Platte oder Nabe mit Innen- oder Außenverzahnung oder aber auch als Bremsklotzträger vorliegen.

Normalerweise wird der Reibbelag durch Verpressen der entsprechenden Reibmaterialien in der Hitze und Ausstanzen oder Ausschneiden hergestellt. Der in dieser Weise hergestellte Reibbelag wird dann auf den Träger, der aus Metall oder einem gespritzten Kunststoffmaterial bestehen kann, aufgeklebt oder aufgenietet. Die hierzu verwendeten Kleber sind lösungsmittelhaltig und werden unter erhöhter Temperatur im Ofen ausgehärtet, wobei Lösungsmittel freigesetzt werden. Die ebenfalls verwendeten Zweikomponentenkleber besitzen nicht die für den Einsatz der Reibkörper erforderliche Temperaturbeständigkeit.

Das Vernieten der Reibbeläge mit dem Träger ist aufwendig und teuer und bietet nur eine punktweise Befestigung des Reibbelages, so daß dieser sich zwischen den Nieten "bauchen" kann. Ein weiterer großer Nachteil sind die hohen Herstellungskosten der Metallträger, insbesondere dann, wenn sie innen oder außen Verzahnungen aufweisen, die eine sehr große Passgenauigkeit besitzen müssen. Schließlich ergeben sich durch die unterschiedliche Wärmeausdehnung von metallischem Träger und Reibbelag Probleme durch Verziehen der Reibbeläge und Ablösen von dem Träger.

So offenbart die DE 21 09 907 A einen Bremsbelag für Fahrzeugbremsen, insbesondere einen Bremsklotz, der aus mehreren Teilen unterschiedlicher Beschaffenheit besteht, die stoffschlüssig miteinander verbunden sind, namentlich durch Verkleben. Das Verkleben dieser Einzelteile mit sich und dem erforderlichen Träger, der beispielsweise aus Stahl besteht, ist nicht nur wegen der Bereitstellung dieses metallischen Trägers und des erforderlichen Klebstoffes kostspielig, sondern vermag im Hinblick auf die erforderliche Verbindung der Reibkörperteile untereinander und mit dem Träger nicht zu befriedigen.

Aus der DE 39 05 627 C2 ist ein Verfahren zur Herstellung eines Bremskörpers für eine Scheibenbremse bekannt, welcher eine ebene Grundplatte und als Reibbelag eine Auflage auf der Grundplatte aufweist, mit mindestens zwei Auflageabschnitten mit unterschiedlichen Reibeigenschaften. Das Verfahren besteht darin, die den verschiedenen Auflageabschnitten zugeordneten, körnig ausgebildeten Materialien, die in Abhängigkeit von den jeweiligen Auflageabschnitten beispielsweise unterschiedliche Anteile von Schleifmitteln enthalten können, in ein Formgestell einzubringen, welches eine die einzelnen Auflageabschnitte voneinander trennende Unterteilungseinheit aufweist, und gleichzeitig sämtliche Auflageabschnitte auf der Grundplatte durch eine Preßbehandlung zu formen und die Auflageabschnitte auf der Grundplatte unter Druck wärmezubehandeln.

Die EP 0 859 164 A1 offenbart ein Reibelement, insbesondere für eine Kraftfahrzeugbremse oder eine Reibkupplung, wobei das Reibelement einen Belagträger und einen darauf befestigten Reibbelag besitzt, der je nach Verschleißgrad einen veränderlichen Reibwert µ aufweist, um in dieser Weise das Entstehen unerwünschter Geräusche während des Betriebes zu verhindern.

Die aus diesem Stand der Technik bekannten Reibkörper mit einem Träger und mindestens einem darauf angeordneten Reibbelag vermögen insoweit nicht zu befriedigen, als Reibbelag und Träger getrennt in kostenaufwendiger Weise hergestellt werden und dann miteinander verbunden werden müssen, beispielsweise durch Verkleben oder Vernieten, welche Befestigungsmethoden häufig nicht die für die Praxis erforderliche Festigkeit aufweisen, so daß der auf dem Träger vorliegende Reibbelag sich verformen oder gegebenenfalls sogar ablösen kann.

Die Aufgabe der vorliegenden Erfindung besteht nun darin, einen einstückigen Reibkörper der eingangs angegebenen Art zu schaffen, bei dem Reibbelag und Träger in einem einzigen Arbeitsvorgang hergestellt und miteinander verbunden werden, wobei es ohne weiteres möglich ist, dem Reibbelag einerseits und dem Träger andererseits die zur Erfüllung seiner Aufgabe erforderlichen Eigenschaften zu verleihen und dennoch eine homogene Verbindung dieser Teile zu erreichen. Eine weitere Aufgabe besteht darin, einen solchen einstückigen Reibkörper zu schaffen, der mindestens zwei Bereiche mit unterschiedlichen Reibeigenschaften und/oder mechanischen Eigenschaften aufweist und der damit auf einer oder beiden Reiboberflächen Bereiche mit unterschiedlichen Reibeigenschaften besitzt. Dabei sollen die Reibflächen auch in Form von mehreren Schichten und unterschiedlicher Schichtdicke übereinander angeordnet sein oder aber von Segmenten oder Feldern mit beliebiger Form nebeneinander mit jeweils unterschiedlichen Reibeigenschaften ausgestaltet werden können, so daß es gelingt, das Reibverhalten exakt auf die technischen Anforderungen für die bestimmungsgemäße Benutzung abzustimmen. Dabei muß in allen Fällen sichergestellt sein, daß der oder die Reibbeläge in einer solchen Weise untereinander und mit dem Träger verbunden sind, daß sich eine deutliche Erhöhung der Scherfestigkeit zwischen den einzelnen Teilen beziehungsweise Schichten und damit eine Steigerung der Festigkeitseigenschaften des Reibkörpers ergibt.

Diese Aufgabe wird erfindungsgemäß dadurch gelöst, daß der Reibbelag stoffschlüssig und durch Verstärkungsfasern, welche die Grenzschicht zwischen Träger und Reibbelag durchdringen, formschlüssig mit dem Träger verbunden ist.

Gegenstand der Erfindung ist daher der einstückige Reibkörper nach Anspruch 1. Die Unteransprüche betreffen bevorzugte Ausführungsformen dieses Erfindungsgegenstandes sowie ein Verfahren zur Herstellung dieses erfindungsgemäßen einstückigen Reibkörpers.

Der Anspruch 1 betrifft daher einen einstückigen Reibkörper mit einem Träger und mindestens einem darauf angeordneten Reibbelag, auf der Grundlage von Verstärkungsfasern, hitzegehärtete Bindemittel und übliche Zusatzstoffe enthaltenden Reibmaterialien, der dadurch gekennzeichnet ist, daß der mindestens eine Reibbelag stoffschlüssig und über die Grenzschicht zwischen Träger und Reibbelag durchdringende Verstärkungsfasern formschlüssig mit dem Träger verbunden ist.

Bei dem erfindungsgemäßen einstückigen Reibkörper bestehen somit also sowohl der Träger als auch der mindestens eine darauf angeordnete Reibbelag aus ausgehärteten Reibmaterialien auf der Grundlage von Verstärkungsfasern, hitzehärtbaren Bindemitteln und üblichen Füllstoffen. Dabei sind die Bestandteile und die Mengenverhältnisse der Reibmaterialien für den Träger und den mindestens einen darauf angeordneten Reibbelag in der Weise ausgewählt, daß die zur Erfüllung der jeweiligen Aufgaben erforderlichen Eigenschaften erreicht werden, nämlich einerseits die angestrebten Reibwerte des Reibbelags und andererseits die notwendigen Festigkeitswerte für den Träger, der Bohrungen, Verzahnungen oder andere Mitnehmerformen beliebiger Art aufweisen kann, die sich in einem Preßvorgang unter Einsatz entsprechender Preßformen in einem Arbeitsgang mit hoher Preßgenauigkeit erzeugen lassen.

Gemäß einer bevorzugten Ausführungsform dieses Reibkörpers sind die Reibmaterialien des mindestens einen Reibbelags und des Trägers stoffschlüssig und durch Vernadeln der in den jeweiligen Reibmaterialien enthaltenen Verstärkungsfasern, vor der Aushärtung der Reibmaterialien in einer dem herzustellenden Reibkörper entsprechenden Preßform unter Hitze und Druck, von den Außenoberflächen des Reibkörpers her formschlüssig miteinander verbunden.

Das erfindungsgemäße Vernadeln der Reibmaterialien für den Träger beziehungsweise des mindestens einen darauf angeordneten Reibbelags bewirkt einen zusätzlichen Formschluß zwischen den Schichten durch einen Faserverbund, wodurch höhere Scherkräfte übertragen werden können, als nur mit dem Stoffschluß allein, der sich durch das Aushärten der das hitzehärtbare Bindemittel enthaltenden Reibmaterialien ergibt.

Dabei weicht die erfindungsgemäße Vernadelung von der üblichen Vernadelungstechnik ab, die beispielsweise für die Herstellung von Nadelfilzen angewandt wird, und darin besteht, daß man die beiden zu vernadelnden Schichten mit einer spitzen Nadel durchsticht und die Faser mit Hilfe von an der Nadel vorhandenen Widerhaken aus der unteren Schicht in die obere Schicht zieht. Erfindungsgemäß erfolgt das Vernadeln aufgrund der geringen Länge der Verstärkungsfasern in der Weise, daß diese mit Hilfe einer stumpfen Nadel von der der Nadel zugewandten ersten Schicht in die in Stoßrichtung der Nadel liegenden Schicht mit beispielsweise des Reibmaterials für den Träger gestoßen wird.

In dieser Weise werden die Verstärkungsfasern der Reibmaterialien für den Träger beziehungsweise für den mindestens einen darauf angeordneten Reibbelag von außen durch dieses Reibmaterial in das daran angrenzende Reibmaterial für den Träger oder einen weiteren Reibbelag gestoßen, in der Weise, daß diese Verstärkungsfasern die Grenzschicht zwischen diesen Reibmaterialien durchdringen und eine formschlüssige Verbindung dieser Reibmaterialien bewirken. Ersichtlich erfolgt das Vernadeln vor der Aushärtung der Reibmaterialien für den Träger und den mindestens einen darauf angeordneten Reibbelag unter Hitze und Druck in einer dem angestrebten Reibkörper entsprechenden Preßform.

Durch die in dieser Weise die Grenzschicht zwischen Träger und Reibbelag durchdringenden Verstärkungsfasern ergibt sich nach dem Aushärten der Reibmaterialien neben dem Stoffschluß ein Formschluß durch diese Verstärkungsfasern, so daß der in dieser Weise erhaltene Reibkörper anwendungstechnisch in seinen Eigenschaften den herkömmlichen Reibkörpern, bei denen ein Reibbelag auf einen metallischen Träger aufgenietet oder aufgeklebt worden ist, deutlich überlegen ist. Weiterhin läßt sich ohne weiteres durch Einstellung der Art und Mengen der Bestandteile der Reibmaterialien für den Träger beziehungsweise den oder die Reibbeläge das deutlich unterschiedliche Eigenschaftsprofil im Bereich des Träger beziehungsweise des Reibbelages gezielt auf die Erfordernisse für die bestimmungsgemäße Benutzung des einstückigen Reibkörpers anpassen.

Gemäß einer weiteren bevorzugten Ausführungsform der Erfindung umfasst der Reibkörper mindestens zwei Reibbeläge mit unterschiedlichen Reibeigenschaften und/oder mechanischen Eigenschaften, welche Reibbeläge stoffschlüssig und über die Grenzschicht zwischen Träger und Reibbelag und/oder zwischen den Reibbelägen durchdringende Verstärkungsfasern formschlüssig mit dem Träger und/oder miteinander verbunden sind.

Gemäß einer weiteren vorteilhaften Ausführungsform der Erfindung sind der Träger und der Reibbelag oder die Reibbeläge aus gleichartigen oder unterschiedlichen Reibmaterialien mit entsprechend gleichen oder unterschiedlichen Reibeigenschaften und/oder mechanischen Eigenschaften ausgebildet.

Dabei sind die gleichartigen oder unterschiedlichen Reibmaterialien der Reibbeläge und des Trägers stoffschlüssig und durch Vernadeln der in den unterschiedlichen Reibmaterialien dieser Bereiche enthaltenen Verstärkungsfasern. vor der Aushärtung der Reibmaterialien in einer dem herzustellenden Reibkörper entsprechenden Preßform unter Hitze und Druck, von den Außenoberflächen der Reibbeläge her formschlüssig miteinander und/oder dem Träger verbunden.

Einer weiteren vorteilhaften Ausführungsform der Erfindung zufolge ist der mindestens eine Reibbelag schichtförmig auf dem Träger angeordnet.

Gemäß einer weiteren bevorzugten Ausführungsform der Erfindung umfasst der Reibkörper mindestens zwei Bereiche unterschiedlicher Reibeigenschaften, die schichtförmig aufeinander angeordnet sind. Gemäß einer weiteren Ausführungsform sind die mindestens zwei Bereiche unterschiedlicher Reibeigenschaften des erfindungsgemäßen Reibkörpers nebeneinander angeordnet, in der Weise, daß sie eine gemeinsame Reiboberfläche mit unterschiedlichen Reibeigenschaften in den jeweiligen Oberflächenbereichen bilden. Vorzugsweise kann dies in der Weise erfolgen, daß der eine der mindestens zwei Bereiche unterschiedlicher Reibeigenschaft den anderen Bereich unter Bildung einer gemeinsamen Reiboberfläche mit unterschiedlichen Reibeigenschaften in den jeweiligen Oberflächenbereichen umgibt.

Vorzugsweise liegt der eine der mindestens zwei Bereiche mit unterschiedlichen Reibeigenschaften in Form eines oder mehrerer Segmente oder Felder beliebiger Form vor, die in das Reibmaterial des anderen Bereiches unter Bildung einer gemeinsamen Reiboberfläche mit unterschiedlichen Reibeigenschaften in den jeweiligen Segmenten oder Feldern eingebettet sind.

Entsprechend einer bevorzugten Ausführungsform der Erfindung ist der Träger in Form einer Schicht zwischen zwei Reibbelägen mit gleichen oder unterschiedlichen Reibeigenschaften und/oder mechanischen Eigenschaften vorgesehen, wobei der Träger und die Reibbeläge stoffschlüssig und durch Vernadeln der in den Reibmaterialien der außenliegenden Reibbeläge mit gleichen oder unterschiedlichen Reibeigenschaften enthaltenen Verstärkungsfasern, vor der Aushärtung der Reibmaterialien in einer dem herzustellenden Reibkörper entsprechenden Preßform unter Hitze und Druck formschlüssig mit den beiden Reibbelägen verbunden.

Der erfindungsgemäße Reibkörper enthält vorzugsweise 10 bis 60 Gew.-%, vorzugsweise 20 bis 50 Gew.-% der Verstärkungsfasern, bezogen auf das Gewicht des Reibkörpers. Als Verstärkungsfasern können organische und/oder anorganische Fasern vorliegen, beispielsweise Glasfasern, Keramikfasern, Aluminiumoxidfasern, Kohlenstoffasern, Aramidfasern, Stahlfasern oder Gemische aus diesen Fasern.

Die Verstärkungsfasern besitzen vorzugsweise eine mittlere Faserlänge, die mindestens der halben Dicke der zu verbindenden Bereiche mit unterschiedlichen Reibeigenschaften beziehungsweise der Trägermaterialschicht entspricht, um in dieser Weise sicherzustellen, daß die Verstärkungsfasern beim Vernadelungsvorgang teilweise in ausreichendem Maße in den Träger beziehungsweise den anderen Bereich mit unterschiedlichen Reibeigenschaften gestoßen werden, um in dieser Weise den erfindungswesentlichen Formschluss sicherzustellen. Dies erfolgt dadurch, daß die Verstärkungsfasern in ausreichender Zahl sich von dem dem einen Bereich über die Grenzschicht in den anderen Bereich erstrecken und damit den erfindungswesentlichen Formschluss zwischen diesen Bereichen bewirken. Vorzugsweise besitzen die Verstärkungsfasern eine mittlere Faserlänge von 3 bis 15 mm, vorzugsweise von 5 bis 10 mm.

Es hat sich gezeigt, daß die erfindungsgemäße Verbindung von Träger und dem oder den Reibbelägen beziehungsweise der Bereiche mit unterschiedlichen Reibeigenschaften durch den Formschluß mit Hilfe der die Grenzschicht durchdringenden Verstärkungsfasern die Abscherfestigkeit der Reibbeläge um etwa 30% erhöht, was nicht nur eine wesentlich höhere Standfestigkeit des Reibkörpers sicherstellt, sondern es auch ermöglicht, die nach dem Stand der Technik notwendigen Trägerplatten, die Bohrungen und Verzahnungen oder andere Mitnehmerformen aufweisen müssen, einstückig aus dem Reibmaterial zu bilden, wobei die Festigkeitseigenschaften des Reibmaterials in diesen Bereichen auf die dort auftretenden Kräfte gezielt angepaßt werden können. Da in diesem Fall das Material weitgehend gleichmäßige Wärmeausdehnungseigenschaften aufweist, können auch die Probleme überwunden werden, die sich bei der Anwendung von metallischen oder Kunststoff-Trägermaterialien anderer Art, auf welche die Reibkörper in üblicher Weise durch Aufnieten oder Aufkleben befestigt werden müssen, ergeben.

Ein weiterer Gegenstand der Erfindung ist ein Verfahren zur Herstellung des erfindungsgemäßen einstückigen Reibkörpers, welches dadurch gekennzeichnet ist, daß man die Verstärkungsfasern, hitzehärtbare Bindemittel und übliche Zusatzstoffe enthaltenden Reibmaterialien für den Träger und den mindestens einen Reibbelag in der gewünschten Form und Anordnung zusammenfügt, die in den Reibmaterialien des zusammengefügten Verbundes enthaltenen Verstärkungsfasern derart vernadelt, daß mindestens die Verstärkungsfasern des Reibmaterials des mindestens einen Reibbelags das Reibmaterial des Trägers und/oder des anderen Reibbelags zumindest zum Teil durchdringen, und das vernadelte Zwischenprodukt in einer dem herzustellenden Reibkörper entsprechenden Preßform unter Hitze und Druck aushärtet.

Erfindungsgemäß wird der beanspruchte Reibkörper somit in einem Arbeitsgang aus den Bestandteilen des Reibmaterials, die vorzugsweise keine organischen Lösungsmittel enthalten, formgepresst, wobei es möglich ist, den Reibkörper mit einer Nabe, einer Verzahnung oder beliebig anders geformten Mitnehmerprofilen in der Nabe oder am Umfang zu versehen. Die Passgenauigkeit der Preßteile auch in den Verzahnungen liegt dabei ohne Nachbearbeitung im Bereich von zerspanungtechnisch hergestellten Metallteilen, ein Sachverhalt, der ermöglicht wird durch homogene und gewichtsoptimierte Reibmaterialien, die vorzugsweise im Naßverfahren ohne Zusatz von organischen Lösungsmitteln hergestellt werden. Die beim Vernadeln des Zwischenproduktes entstehenden Löcher begünstigen beim Preßvorgang die Entgasung des Reibmaterials, verbessern hierdurch in überraschender Weise die Festigkeit des erhaltenen Reibkörpers zusätzlich in starkem Maße.

Die beim erfindungsgemäßen Verfahren für den Träger und den mindestens einen Reibbelag eingesetzten Reibmaterialien enthalten neben den erfindungswesentlichen Verstärkungsfasern ein hitzehärtbares Bindemittel, vorzugsweise ein Phenolharz, das gegebenenfalls mit Melaminharzen. Polyamiden. Epoxidharzen, Ölen, Kresolharzen und dergleichen in Mengen von 1 bis 15 Gew.-% versetzt sein kann. Diese Reibmaterialien enthalten weiterhin als übliche Zusatzstoffe Gleitmittel, wie Graphit, Molybdändisulfid, Bariumsulfat, Calciumcarbonat oder Mischungen davon in Mengen von 10 bis 25, vorzugsweise 15 bis 20 Gew.-%, Schleifmittel auf der Grundlage von Oxiden, Nitriden oder Carbiden, wie beispielsweise Al₂O₃. SiO₃. Cr₂O₃, Fe₂O₃, Fe₃O₄, ZrO₂, MgO, CaO, SiC, PM, PC, Si₃N₄ und AIN und Gemische davon in Mengen von 0,5 bis 10 Gew.-%, vorzugsweise 1 bis 5 Gew.-%. Weiterhin kann das Reibmaterial Füllstoffe wie Bariumsulfat oder Calciumsulfat enthalten, vulkanisierten oder unvulkanisierten natürlichen Kautschuk oder synthetischen Kautschuk in Mengen von 1 bis 15 Gew.-%, vorzugsweise 5 bis 10 Gew.-%. In Abhängigkeit von der Art und der Menge der eingesetzten üblichen Bestandteile können die Eigenschaften der Reibmaterialien für die unterschiedlichen Bereiche gezielt auf die angestrebten Endeigenschaften des erfindungsgemäßen Reibkörpers eingestellt werden.

Nach der Herstellung der verschiedenen Reibmaterialien für den Träger beziehungsweise des mindestens einen Reibbelags, werden diese Reibmaterialien in die gewünschte Form gebracht, beispielsweise der Träger in die Form einer Trägerschicht und den Reibbelag in Form einer Reibbelagschicht, die auf diese Trägermaterialschicht aufgebracht wird, durch das Aufbringen von mindestens zwei schichtförmigen Reibbelägen übereinander auf den Träger oder durch Nebeneinanderanordnen der mindestens zwei Reibbeläge mit unterschiedlichen Reibeigenschaften auf dem Träger. Anschließend wird das Material zur Bildung eines einstückigen Reibkörpers zusammengepresst und in der erfindungsgemäßen Weise vernadelt, derart, daß mindestens die Verstärkungsfasern des einen Reibmaterials durch die Grenzschicht zu dem anderen Reibmaterial eindringen, wonach das vernadelte Zwischenprodukt in üblicher Weise unter Einwirkung von Hitze und Druck und unter Aushärtung des hitzehärtbaren Bindemittels zu dem erfindungsgemäßen einstückigen Reibkörper verpresst wird. Bei diesem Verpressen verbinden sich die unterschiedlichen Bereiche des Reibkörpers aufgrund der in den unterschiedlichen Reibmaterialien vorhandenen Bindemitteln zu einem homogenen einstückigen Reibkörper, wodurch wegen der für die beiden Bereiche eingesetzten vorzugsweise gleichartigen hitzehärtbaren Bindemittel der erfindungsgemäße Stoffschluß erfolgt. Durch die Faserdurchdringung an den Grenzflächen ergibt sich eine mechanische Verzahnung der unterschiedlichen Bereiche und damit der erfindungsgemäße Formschluß.

Bei der erfindungsgemäßen Verfahrensweise erfolgt also das Vernadeln der in den Reibmateralien für den oder die Reibbeläge und der Trägermaterialschicht vorhandenen Verstärkungsfasern derart, daß die Verstärkungsfasern des oder der Reibbelagschichten zumindest die Trägermaterialschicht zum Teil durchdringen beziehungsweise die Verstärkungsfasern der Trägermaterialschicht das Reibmaterialschicht des mindestens einen Reibbelags zumindest zum Teil durchdringen.

Das Vernadeln erfolgt vorzugsweise durch zumindest teilweises Einstoßen der Verstärkungsfasern des mindestens einen Reibbelages in den Träger und/oder den anderen Reibbelag. Gemäß einer bevorzugten Ausführungsform der Erfindung erfolgt das Vernadeln durch teilweises Einstoßen der Verstärkungsfasern mit Hilfe von stumpfen Nadeln. Vorzugsweise erfolgt das Vernadeln durch teilweises Einstoßen der Verstärkungsfasern mit Hilfe von stumpfen Nadeln von den Außenseiten des zusammengefügten Verbundes. Gemäß einer weiteren Ausführungsform erfolgt das Vernadeln durch teilweises Einstoßen der Verstärkungsfasern mit Hilfe von stumpfen Nadeln von den Außenseiten des mindestens einen Reibbelags und/oder des Trägers des zusammengesetzten Verbundes.

In all diesen Fällen werden die stumpfen Nadeln in der Weise durch die außen liegenden Bereiche bzw. die Trägermaterialschicht gestoßen, so daß die Verstärkungsfasern zumindest zum Teil in die in Durchstoßrichtung dahinterliegenden anderen Bereiche eingestoßen werden. Im Fall des Vernadelns eines zusammengefügten Verbundes von beiden Außenseiten erfolgt dies mit Hilfe von zueinander versetzten Nadeln, so daß die von der einen Seite bzw. von der anderen Seite eingestoßenen Nadeln nicht aufeinandertreffen können und auch keine Schwächung des homogenen Verbundes erfolgt.

Wesentlich ist es, daß bei dem erfindungsgemäßen Verfahren das Vernadeln in der Weise erfolgt, daß die Verstärkungsfasern zumindest teilweise von dem einen Bereich in den benachbarten Bereich mit unterschiedlichen Reibeigenschaften und in die Trägermaterialschicht eingeführt werden. Vorzugsweise bewirkt man das Vernadeln dabei in der Weise, daß die Verstärkungsfasern mindestens bis zu der Mitte des benachbarten Bereichs mit unterschiedlichen Reibeigenschaften und/oder der Trägermaterialschicht eingeführt werden.

Gemäß einer bevorzugten Ausführungsform erfolgt das Vernadeln unter Anwendung einer Nadeldichte von 3 bis 50 Nadeln/cm² vorzugsweise 9 bis 16 Nadeln/cm², was durch entsprechende Einstellung des Nadelabstandes bzw. der Schrittweite der Nadelversetzung bzw. der Anordnung der Nadeln auf einem flächigen Nadelbett gesteuert werden kann.

Vorzugsweise bewirkt man das Vernadeln unter Verwendung von zylindrischen Nadeln beliebigen Querschnitts mit einer senkrecht zur Längsachse abgestumpften Stirnfläche. Diese Nadeln unterscheiden sich von den üblicherweise für das Nadeln von Textilmaterialien verwendeten dadurch, daß sie an ihrem in Arbeitsrichtung vorderen Ende keine Spitze aufweisen und auch keinen Widerhaken, mit dem üblicherweise beim Vernadeln die Fasern aus der einen Schicht in die andere Schicht herausgezogen werden. Erfindungsgemäß erfolgt das Vernadeln durch die Anwendung von Nadeln mit abgestumpfter Stirnfläche durch Einstoßen der Verstärkungsfasern von dem der Nadel zugewandten Bereich in den darunterliegenden Bereich mit unterschiedlichen Reibeigenschaften bzw. der dort vorliegenden Trägermaterialschicht. Die zylindrischen Nadeln, die einen kreisförmigen, quadratischen oder polygonalen Querschnitt aufweisen können, besitzen vorzugsweise einen Durchmesser von 0,1 bis 3 mm, vorzugsweise von 0,5 bis 1,5 mm.

In geeigneter Weise bewirkt man das Vernadeln bis zu einer der halben Länge der Verstärkungsfasern entsprechenden Eindringtiefe der Nadel, um in dieser Weise sicherzustellen, daß die Verstärkungsfasern nur zum Teil aus dem einen Bereich ausgestoßen und in den anderen Bereich eingestoßen werden, um in dieser Weise zu erreichen, daß die Verstärkungsfaser sich über die Grenzschicht zwischen den beiden Bereichen erstrecken und mit ihren Enden in beiden Bereichen vorliegen und hierdurch den angestrebten Formschluß bewirken.

Der erfindungsgemäße Reibkörper und das Verfahren zu seiner Herstellung ermöglichen eine Reihe von Vorteilen gegenüber dem oben angesprochenen Stand der Technik, indem erfindungsgemäß in einfacher Weise in einem Schritt ein faserverstärkter einstückiger Kompaktbelag hergestellt werden kann, der keinen Metallträger benötigt, sondern in den der Träger einstückig eingeformt ist, wobei durch die eingesetzten unterschiedlichen Reibmaterialien gegebenenfalls auch Bereiche mit unterschiedlichen Reibeigenschaften vorliegen, und damit ein Produkt erhalten wird, welches auf unterschiedlichen Oberflächenbereichen unterschiedliche Reibeigenschaften, Festigkeitswerte oder Dämpfungseigenschaften aufweisen kann. In dieser Weise gelingt es, die angestrebten Reibwerte exakt einzustellen und auch bei kleiner Baugröße eine hohe Kraftübertragung bei optimalem Dämpfungsverhalten zu erreichen.

Da das erfindungsgemäße Verfahren lösungsmittelfrei arbeitet, ist es sehr umweltverträglich, ermöglicht jede gewünschte Reibmaterialkombination und eine Verbindung der Materialien ohne zusätzlichen Klebstoff. Erfindungsgemäß ist es ohne weiteres möglich, den Gesamt-Reibkörper aus vorgefertigten Einzel-Rohbelägen aus unterschiedlichen Rezepturen herzustellen und durch Vernadeln der Schichten vor dem Verpressen in der Hitze und unter Druck eine feste Verbindung des mindestens einen Reibbelags mit dem Träger und gegebenenfalls der Bereiche unterschiedlichen Reibverhaltens zu erreichen und wesentlich höhere Scherkräfte ohne Zerstörung des Materials zu erzielen.

## Patentansprüche

1. Einstückiger Reibkörper mit einem Träger und mindestens einem darauf angeordneten Reibbelag, auf der Grundlage von Verstärkungsfasern, hitzegehärtete Bindemittel und übliche Zusatzstoffe enthaltenden Reibmaterialien, **dadurch gekennzeichnet, daß** der mindestens eine Reibbelag stoffschlüssig und über die Grenzschicht zwischen Träger und Reibbelag durchdringende Verstärkungsfasern formschlüssig mit dem Träger verbunden ist.

2. Reibkörper nach Anspruch 1, **dadurch gekennzeichnet, daß** die Reibmaterialien des mindestens einen Reibbelags und des Trägers stoffschlüssig und durch Vernadeln der in den Reibmaterialien enthaltenen Verstärkungsfasern, vor der Aushärtung der Reibmaterialien in einer dem herzustellenden Reibkörper entsprechenden Preßform unter Hitze und Druck, von den Augenoberflächen des Reibkörpers formschlüssig miteinander verbunden sind.

3. Reibkörper nach Anspruch 1 oder 2, **dadurch gekennzeichnet, daß** er mindestens zwei Reibbeläge mit unterschiedlichen Reibeigenschaften und/ oder mechanischen Eigenschaften aufweist, die stoffschlüssig und über die Grenzschicht zwischen Träger und Reibbelag und/oder zwischen den Reibbelägen durchdringende Verstärkungsfasern formschlüssig mit dem Träger und/oder miteinander verbunden sind.

4. Reibkörper nach Anspruch 1, **dadurch gekennzeichnet, daß** der Träger und der Reibbelag oder die Reibbeläge aus gleichartigen oder unterschiedlichen Reibmaterialien mit entsprechend gleichen oder unterschiedlichen Reibeigenschaften und/oder mechanischen Eigenschaften ausgebildet sind

5. Reibkörper nach mindestens einem der Ansprüche 3 oder 4, **dadurch gekennzeichnet, daß** die gleichartigen oder unterschiedlichen Reibmaterialien der Reibbeläge und des Trägers stoffschlüssig und durch Vernadeln der in den unterschiedlichen Reibmaterialien dieser Bereiche enthaltenen Verstärkungsfasern, vor der Aushärtung der Reibmaterialien in einer dem herzustellenden Reibkörper entsprechenden Preßform unter Hitze und Druck, von den Außenoberflächen der Reibbeläge formschlüssig miteinander und/oder dem Träger verbunden sind.

6. Reibkörper nach mindestens einem der Ansprüche 1 bis 5, **dadurch gekennzeichnet, daß** der mindestens eine Reibbelag schichtförmig auf dem Träger angeordnet ist.

7. Reibkörper nach mindestens einem der Ansprüche 1 bis 5, **dadurch gekennzeichnet, daß** die mindestens zwei Reibbeläge mit unterschiedlichen Reibeigenschaften nebeneinander auf dem Träger angeordnet sind und eine gemeinsame Reiboberfläche mit unterschiedlichen Reibeigenschaften und/oder mechanischen Eigenschaften in den jeweiligen Oberflächenbereichen bilden.

8. Reibkörper nach Anspruch 7, **dadurch gekennzeichnet, daß** der eine der mindestens zwei Reibbeläge den oder die anderen Reibbeläge unter Bildung einer gemeinsamen Reiboberfläche mit unterschiedlichen Reibeigenschaften und/oder mechanischen Eigenschaften in den jeweiligen Oberflächenbereichen umgibt.

9. Reibkörper nach Anspruch 8, **dadurch gekennzeichnet, daß** der eine der mindestens zwei Reibbeläge in Form von einem oder mehreren Segmenten oder Feldern beliebiger Form vorliegt, die in das Reibmaterial des anderen Reibbelags unter Bildung einer gemeinsamen Reiboberfläche mit unterschiedlichen Reibeigenschaften und/oder mechanischen Eigenschaften in den jeweiligen Segmenten oder Feldern eingebettet ist.

10. Reibkörper nach mindestens einem der vorhergehenden Ansprüche, **dadurch gekennzeichnet, daß** der Träger in Form einer eine Schicht zwischen zwei Reibbelägen mit gleichen oder unterschiedlichen Reibeigenschaften und/oder mechanischen Eigenschaften vorgesehen ist, die stoffschlüssig und durch Vernadeln der in den Reibmaterialien der außenliegenden Reibbeläge mit gleichen oder unterschiedlichen Reibeigenschaften enthaltenen Verstärkungsfasern, vor der Aushärtung der Reibmaterialien in einer dem herzustellenden Reibkörper entsprechenden Preßform unter Hitze und Druck, formschlüssig mit den beiden Reibbelägen verbunden ist.

11. Reibkörper nach mindestens einem der vorhergehenden Ansprüche, **dadurch gekennzeichnet, daß** er 10 bis 60 Gew.-%, vorzugsweise 20 bis 50 Gew.-% Verstärkungsfasern, bezogen auf das Gesamtgewicht des Reibkörpers, enthält.

12. Reibkörper nach mindestens einem der vorhergehenden Ansprüche, **dadurch gekennzeichnet, daß** er organische und/oder anorganische Verstärkungsfasern enthält.

13. Reibkörper nach Anspruch 12, **dadurch gekennzeichnet, daß** er als Verstärkungsfasern Glasfasern, Keramikfasern, Aluminiumoxidfasern, Kohlenstoffasern, Aramidfasern, Stahlfasern oder ein Gemisch aus solchen Fasern enthält.

14. Reibkörper nach mindestens einem der vorhergehenden Ansprüche, **dadurch gekennzeichnet, daß** die Verstärkungsfasern eine mittlere Faserlänge aufweisen, die mindestens der halben Dicke des mindestens einen Reibbelags entspricht.

15. Reibkörper nach Anspruch 14, **dadurch gekennzeichnet, daß** die Verstärkungsfasern eine mittlere Faserlänge von 3 bis 15 mm, vorzugsweise von 5 bis 10 mm aufweisen.

16. Verfahren zur Herstellung des einstückigen Reibkörpers nach mindestens einem der vorhergehenden Ansprüche, **dadurch gekennzeichnet, daß** man die Verstärkungsfasern, hitzhärtbare Bindemittel und übliche Zusatzstoffe enthaltenden Reibmaterialien für den Träger und den mindestens einen Reibbelag in der gewünschten Form und Anordnung zusammenfügt, die in den Reibmaterialien des zusammengefügten Verbunds enthaltenen Verstärkungsfasern derart vernadelt, daß mindestens die Verstärkungsfasern des Reibmaterials des mindestens einen Reibbelags das Reibmaterial des Trägers und/oder das Reibmaterial des anderen Reibbelags zumindest zum Teil durchdringen, und das vernadelte Zwischenprodukt in einer dem herzustellenden Reibkörper entsprechenden Preßform unter Hitze und Druck aushärtet.

17. Verfahren nach Anspruch 15 oder 16, **dadurch gekennzeichnet, daß** das Vernadeln durch zumindest teilweises Einstoßen der Verstärkungsfasern des mindestens einen Reibbelags in den Träger und/oder den anderen Reibbelag erfolgt.

18. Verfahren nach Anspruch 17, **dadurch gekennzeichnet, daß** das Vernadeln durch teilweises Einstoßen der Verstärkungsfasern mit Hilfe von stumpfen Nadeln erfolgt.

19. Verfahren nach Anspruch 18, **dadurch gekennzeichnet, daß** das Vernadeln durch teilweises Einstoßen der Verstärkungsfasern mit Hilfe von stumpfen Nadeln von den Außenseiten des zusammengefügten Verbunds erfolgt.

20. Verfahren nach mindestens einem der Ansprüche 15 bis 19, **dadurch gekennzeichnet, daß** das Vernadeln durch teilweises Einstoßen der Verstärkungsfasern mit Hilfe von stumpfen Nadeln von den Außenseiten des mindestens einen Reibbelags und/oder des Trägers des zusammengefügten Verbunds erfolgt.

21. Verfahren nach Anspruch 20, **dadurch gekennzeichnet, daß** das Vernadeln von gegenüberliegenden Außenseiten des zusammengefügten Verbunds mit zueinander versetzten Nadeln erfolgt.

22. Verfahren nach mindestens einem der Ansprüche 15 bis 21, **dadurch gekennzeichnet, daß** das Vernadeln in der Weise erfolgt, daß die Verstärkungsfasern in den benachbarten Reibbelag und/oder den Träger eingeführt werden.

23. Verfahren nach Anspruch 22, **dadurch gekennzeichnet, daß** das Vernadeln in der Weise erfolgt, daß die Verstärkungsfasern mindestens bis zu der Mitte des benachbarten Reibbelags und/oder den Träger eingeführt werden.

24. Verfahren nach mindestens einem der Ansprüche 15 bis 23, **dadurch gekennzeichnet, daß** das Vernadeln unter Anwendung einer Nadeldichte von 3 bis 50 Nadeln/cm², vorzugsweise 9 bis 16 Nadeln/cm² erfolgt.

25. Verfahren nach mindestens einem der Ansprüche 15 bis 24, **dadurch gekennzeichnet, daß** das Vernadeln unter Verwendung von zylindrischen Nadeln mit einer senkrecht zur Längsachse abgestumpften Stirnfläche erfolgt.

26. Verfahren nach Anspruch 25, **dadurch gekennzeichnet, daß** das Vernadeln unter Verwendung von zylindrischen Nadeln mit einem Durchmesser von 0.1 bis 3 mm, vorzugsweise 0,5 bis 1,5 mm erfolgt.

27. Verfahren nach Anspruch 26, **dadurch gekennzeichnet, daß** das Vernadeln unter Verwendung von zylindrischen Nadeln mit kreisförmigem, quadratischem oder polygonalem Querschnitt erfolgt.

28. Verfahren nach mindestens einem der Ansprüche 15 bis 27, **dadurch gekennzeichnet, daß** das Vernadeln bis zu einer der halben Länge der Verstärkungsfasern entsprechenden Eindringtiefe der Nadeln erfolgt.

29. Verfahren nach mindestens einem der Ansprüche 15 bis 28, **dadurch gekennzeichnet, daß** das Aushärten unter Hitze und Druck in einer dem Endprodukt entsprechenden Preßform durchgeführt wird.

## Claims

1. A one-piece friction body having a support and least one friction pad disposed thereon, based on friction materials containing reinforcing fibers, thermoset binders and customary additives, **characterized in that** the at least one friction pad is joined to the support integrally and positive-locking by means of reinforcing fibers penetrating the boundary layer between the support and the friction pad.

2. Friction body as claimed in claim 1, **characterized in that** the friction materials of the at least one friction pad and the support are joined integrally and positive-locking by needling of the reinforcing fibers contained in the friction materials, prior to curing of the friction materials under heat and pressure in a pressing mold corresponding to the friction body to be manufactured, from the outer surfaces of the friction body.

3. Friction body as claimed in claim 1 or 2, **characterized in that** it comprises at least two friction pads with different friction properties and/or mechanical properties which are joined to the support and/or to one another integrally and positive-locking by means of reinforcing fibers penetrating the boundary layer between the support and the friction pad and/or between the friction pads.

4. Friction body as claimed in claim 1, **characterized in that** the support and the friction pad, or the friction pads, consist of similar or different friction materials having correspondingly identical or different friction properties and/or mechanical properties.

5. Friction body as claimed in at least one of claims 3 or 4, **characterized in that** the similar or different friction materials of the friction pads and of the support are joined to one another and/or to the support integrally and positive-locking by needling of the reinforcing fibers contained in the different friction materials of these portions, prior to curing of the friction materials under heat and pressure in a pressing mold corresponding to the friction body to be manufactured, from the outer surfaces of the friction pads.

6. Friction body as claimed in at least one of claims 1 to 5, **characterized in that** the at least one friction pad is arranged on the support in the form of a layer.

7. Friction body as claimed in at least one of claims 1 to 5, **characterized in that** the at least two friction pads with different friction properties are arranged on the support side by side and form a common friction surface with different friction properties and/or mechanical properties in the respective surface portions.

8. Friction body as claimed in claim 7, **characterized in that** the one of the at least two friction pads surrounds the other friction pad, or the other friction pads, to form a common friction surface with different friction properties and/or mechanical properties in the respective surface portions.

9. Friction body as claimed in claim 8, **characterized in that** the one of the at least two friction pads is present in the form of one or a plurality of segments or fields of any desired shape which are embedded in the friction material of the other friction pad to form a common friction surface with different friction properties and/or mechanical properties in the respective segments or fields.

10. Friction body as claimed in at least one of the preceding claims, **characterized in that** the support is provided in the shape of a layer between two friction pads with identical or different friction properties and/or mechanical properties, the layer being joined to the two friction pads integrally and positive-locking by needling of the reinforcing fibers contained in the friction materials of the outer friction pads with identical or different friction properties, prior to curing of the friction materials under heat and pressure in a pressing mold corresponding to the friction body to be manufactured.

11. Friction body as claimed in at least one of the preceding claims, **characterized by** containing 10 to 60% by weight, preferably 20 to 50% by weight of reinforcing fibers, based on the total weight of the friction body.

12. Friction body as claimed in at least one of the preceding claims, **characterized by** containing organic and/or inorganic reinforcing fibers.

13. Friction body as claimed in claim 12, **characterized by** containing as reinforcing fibers glass fibers, ceramic fibers, alumina fibers, carbon fibers, aramid fibers, steel fibers, or a mixture of such fibers.

14. Friction body as claimed in at least one of the preceding claims, **characterized in that** the reinforcing fibers have an average fiber length corresponding to at least half the thickness of the at least one friction pad.

15. Friction body as claimed in claim 14, **characterized in that** the reinforcing fibers have an average fiber length of 3 to 15 mm, preferably 5 to 10 mm.

16. Method of manufacturing the one-piece friction body as claimed in at least one of the preceding claims, **characterized in that** the friction materials containing reinforcing fibers, thermosetting binders and customary additives for the support and the at least one friction pad are bonded together in the desired shape and arrangement, the reinforcing fibers contained in the friction materials of the composite are needled in such manner that at least the reinforcing fibers of the friction material of the at least one friction pad penetrate at least in part the friction material of the support and/or the friction material of the other friction pad, and the needled intermediate is cured under heat and pressure in a pressing mold corresponding to the friction body to be manufactured.

17. Method as claimed in claim 15 or 16, **characterized in that** the needling is performed by forcing the reinforcing fibers of the at least one friction pad at least in part into the support and/or the other friction pad.

18. Method as claimed in claim 17, **characterized in that** the needling is performed by partly forcing-in the reinforcing fibers with the aid of blunt needles.

19. Method as claimed in claim 18, **characterized in that** the needling is performed by partly forcing-in the reinforcing fibers from the outer surfaces of the composite with the aid of blunt needles.

20. Method as claimed in at least one of claims 15 to 19, **characterized in that** the needling is performed by partly forcing-in the reinforcing fibers from the outer surfaces of the at least one friction pad and/or the support of the composite with the aid of blunt needles.

21. Method as claimed in claim 20, **characterized in that** the needling is performed from opposite outer surfaces of the composite with the use of staggered needles.

22. Method as claimed in at least one of claims 15 to 21, **characterized in that** the needling is performed in such manner that the reinforcing fibers are passed into the adjacent friction pad and/or the support.

23. Method as claimed in claim 22, **characterized in that** the needling is performed in such manner that the reinforcing fibers are passed at least as far as the center of the adjacent friction pad and/or the support.

24. Method as claimed in at least one of claims 15 to 23, **characterized in that** the needling is performed by applying a needle density of 3 to 50 needles/cm² preferably 9 to 16 needles/cm².

25. Method as claimed in at least one of claims 15 to 24, **characterized in that** the needling is performed by applying cylindrical needles having a blunt front end in vertical direction relative to the longitudinal axis.

26. Method as claimed in claim 25, **characterized in that** the needling is performed by applying cylindrical needles having a diameter of 0.1 to 3 mm, preferably 0.5 to 1.5 mm.

27. Method as claimed in claim 26, **characterized in that** the needling is performed by applying cylindrical needles having a circular, square or polygonal cross-section.

28. Method as claimed in at least one of claims 15 to 27, **characterized in that** the needling is performed up to a needle penetration depth corresponding to half the length of the reinforcing fibers.

29. Method as claimed in at least one of claims 15 to 28, **characterized in that** the curing is performed under heat and pressure in a pressing mold corresponding to the final product.

## Revendications

1. Corps de friction monobloc, comprenant un support et au moins une garniture de friction disposée sur celui-ci, à base de matériaux de friction contenant des fibres de renfort, des liants thermodurcis et les adjuvants habituels, **caractérisé par le fait que** la garniture de friction, au nombre d'au moins une, est liée au support par matière et par liaison mécanique, par l'intermédiaire de fibres de renfort franchissant l'interface entre le support et la garniture de friction.

2. Corps de friction selon la revendication 1, **caractérisé par le fait que** les matériaux de friction de la garniture de friction, au nombre d'au moins une, et du support sont liés entre eux par matière et, du fait de l'aiguilletage des fibres de renfort contenues dans les matériaux de friction, par liaison mécanique, avant le durcissement des matériaux de friction dans un moule de compression correspondant au corps de friction à fabriquer, sous l'action de la chaleur et de la pression, depuis les surfaces extérieures du corps de friction.

3. Corps de friction selon la revendication 1 ou 2, **caractérisé par le fait qu'**il présente au moins deux garnitures de friction avec des propriétés de friction et/ou des propriétés mécaniques différentes, qui sont reliées au support et/ou entre elles par matière et par liaison mécanique, par l'intermédiaire de fibres de renfort franchissant l'interface entre le support et la garniture de friction et/ou entre les garnitures de friction.

4. Corps de friction selon la revendication 1, **caractérisé par le fait que** le support et la garniture de friction ou les garnitures de friction sont réalisés à partir de matériaux de friction similaires ou différents, avec des propriétés de friction et/ou des propriétés mécaniques similaires ou différentes correspondantes.

5. Corps de friction selon au moins une des revendications 3 ou 4, **caractérisé par le fait que** les matériaux de friction similaires ou différents des garnitures de friction et du support sont liés entre eux et/ou au support par matière et, du fait de l'aiguilletage des fibres de renfort contenues dans les matériaux de friction différents de ces zones, par liaison mécanique, avant le durcissement des matériaux de friction dans un moule de compression correspondant au corps de friction à fabriquer, sous l'action de la chaleur et de la pression, depuis les surfaces extérieures des garnitures de friction.

6. Corps de friction selon au moins une des revendications 1 à 5, **caractérisé par le fait que** la garniture de friction, au nombre d'au moins une, est disposée sous forme de couche sur le support.

7. Corps de friction selon au moins une des revendications 1 à 5, **caractérisé par le fait que** les garnitures de friction, au nombre d'au moins deux, présentant des propriétés de friction différentes, sont disposées côte à côte sur le support et forment une surface de friction commune avec des propriétés de friction et/ou des propriétés mécaniques différentes dans les zones de surface respectives.

8. Corps de friction selon la revendication 7, **caractérisé par le fait que** l'une des garnitures de friction, au nombre d'au moins deux, entoure l'autre ou les autres garnitures de friction en formant une surface de friction commune, avec des propriétés de friction et/ou des propriétés mécaniques différentes dans les zones de surface respectives.

9. Corps de friction selon la revendication 8, **caractérisé par le fait que** l'une des garnitures de friction, au nombre d'au moins deux, se présente sous la forme d'un ou plusieurs segments ou champs de conformation quelconque, qui est/sont encastré(s) dans le matériau de friction de l'autre garniture de friction en constituant une surface de friction commune, avec des propriétés de friction et/ou des propriétés mécaniques différentes dans les segments ou champs respectifs.

10. Corps de friction selon au moins une des revendications précédentes, **caractérisé par le fait que** le support est prévu sous la forme d'une couche qui est placée entre deux garnitures de friction ayant des propriétés de friction et/ou des propriétés mécaniques similaires ou différentes et est liée aux deux garnitures de friction par matière et, du fait de l'aiguilletage des fibres de renfort contenues dans les matériaux de friction des garnitures de friction extérieures, ayant des propriétés de friction similaires ou différentes, par liaison mécanique, avant le durcissement des matériaux de friction dans un moule de compression correspondant au corps de friction à fabriquer, sous l'action de la chaleur et de la pression.

11. Corps de friction selon au moins une des revendications précédentes, **caractérisé par le fait qu'**il contient 10 à 60 % en poids, de préférence 20 à 50 % en poids de fibres de renfort, rapporté au poids total du corps de friction.

12. Corps de friction selon au moins une des revendications précédentes, **caractérisé par le fait qu'**il comporte des fibres de renfort organiques et/ou inorganiques.

13. Corps de friction selon la revendication 12, **caractérisé par le fait qu'**il comporte, en tant que fibres de renfort, des fibres de verre, des fibres céramiques, des fibres d'oxyde d'aluminium, des fibres de carbone, des fibres d'aramide, des fibres d'acier ou un mélange de ces fibres.

14. Corps de friction selon au moins une des revendications précédentes, **caractérisé par le fait que** les fibres de renfort présentent une longueur de fibre moyenne qui correspond au moins à la moitié de l'épaisseur de la garniture de friction, au nombre d'au moins une.

15. Corps de friction selon la revendication 14, **caractérisé par le fait que** les fibres de renfort présentent une longueur de fibre moyenne comprise entre 3 et 15 mm, de préférence entre 5 et 10 mm.

16. Procédé de fabrication du corps de friction monobloc selon au moins une des revendications précédentes, **caractérisé par le fait que** l'on réunit les matériaux de friction, contenant des fibres de renfort, des liants thermodurcissables et les adjuvants habituels et destinés au support et à la garniture de friction, au nombre d'au moins une, sous la forme et avec la configuration souhaitées, on relie par aiguilletage les fibres de renfort contenues dans les matériaux de friction de l'élément composite assemblé, de manière à ce qu'au moins les fibres de renfort du matériau de friction de la garniture de friction, au nombre d'au moins une, pénètrent au moins en partie dans le matériau de friction du support et/ou le matériau de friction de l'autre garniture de friction, et on fait durcir le demi-produit aiguilleté dans un moule de compression correspondant au corps de friction à fabriquer, sous l'action de la chaleur et de la pression.

17. Procédé selon la revendication 15 ou 16, **caractérisé par le fait que** l'aiguilletage est réalisé par enfoncement au moins partiel des fibres de renfort de la garniture de friction, au nombre d'au moins une, dans le support et/ou l'autre garniture de friction.

18. Procédé selon la revendication 17, **caractérisé par le fait que** l'aiguilletage est réalisé par enfoncement partiel des fibres de renfort à l'aide d'aiguilles émoussées.

19. Procédé selon la revendication 18, **caractérisé par le fait que** l'aiguilletage est réalisé par enfoncement partiel des fibres de renfort à l'aide d'aiguilles émoussées, depuis les faces extérieures de l'élément composite assemblé.

20. Procédé selon au moins une des revendications 15 à 19, **caractérisé par le fait que** l'aiguilletage est réalisé par enfoncement partiel des fibres de renfort à l'aide d'aiguilles émoussées, depuis les faces extérieures de la garniture de friction, au nombre d'au moins une, et/ou du support de l'élément composite assemblé.

21. Procédé selon la revendication 20, **caractérisé par le fait que** l'aiguilletage est réalisé depuis les faces extérieures opposées de l'élément composite assemblé, avec des aiguilles qui sont décalées les unes par rapport aux autres.

22. Procédé selon au moins une des revendications 15 à 21, **caractérisé par le fait que** l'aiguilletage est réalisé de manière à ce que les fibres de renfort soient introduites dans la garniture de friction contiguë et/ou dans le support.

23. Procédé selon la revendication 22, **caractérisé par le fait que** l'aiguilletage est réalisé de manière à ce que les fibres de renfort soient introduites au moins jusqu'au milieu de la garniture de friction contiguë et/ou du support.

24. Procédé selon au moins une des revendications 15 à 23, **caractérisé par le fait que** l'aiguilletage est réalisé en utilisant une densité d'aiguilles comprise entre 3 et 50 aiguilles/cm_, de préférence entre 9 et 16 aiguilles/cm_.

25. Procédé selon au moins une des revendications 15 à 24, **caractérisé par le fait que** l'aiguilletage est réalisé en utilisant des aiguilles cylindriques avec une face frontale émoussée perpendiculairement à l'axe longitudinal.

26. Procédé selon la revendication 25, **caractérisé par le fait que** l'aiguilletage est réalisé en utilisant des aiguilles cylindriques avec un diamètre compris entre 0,1 et 3 mm, de préférence entre 0,5 et 1,5 mm.

27. Procédé selon la revendication 26, **caractérisé par le fait que** l'aiguilletage est réalisé en utilisant des aiguilles cylindriques de section circulaire, carrée ou polygonale.

28. Procédé selon au moins une des revendications 15 à 27, **caractérisé par le fait que** l'aiguilletage est réalisé jusqu'à une profondeur de pénétration des aiguilles correspondant à la moitié de la longueur des fibres de renfort.

29. Procédé selon au moins une des revendications 15 à 28, **caractérisé par le fait que** le durcissement est réalisé sous l'action de la chaleur et de la pression, dans un moule de compression correspondant au produit final.
